# EUROPEAN PATENT APPLICATION

(11) **EP 1 870 801 A1**
(43) Date of publication of application: **26.12.2007**
(21) Application number: 07010731.3
(22) Date of filing: 30.05.2007
(51) Int. Cl.: G06F 3/048

(54) **Mobile communication device**

(30) Priority: 21.06.2006 CN 200610094585
(71) Applicant: BENQ CORPORATION, Geishan T'ao yuan 333 (TW)
(72) Inventor: Chao, Chia-Chen, Sinyl Districs, Tapei 110 (TW); Liu, Ya-Fu, Gian Township, Hualian County (TW); Chen, Wen-Kang, Beitou District, Tapei 112 (TW); Chiang, Chi-Pang, Lujhou City, Tapei County (TW)
(74) Representative: Brandenburger, Karin

(57) **Abstract**

Mobile communication devices are provided. A mobile communication device comprises a main surface and a touch screen acting as the only input interface on the main surface. When the mobile communication device is in a communication mode, the touch screen displays a first image through which users input data and execute a communication function. When the mobile communication is in an additional function mode, the touch screen displays a second image through which users input data and execute an additional function.

## Description

### BACKGROUND OF THE INVENTION

### FIELD OF THE INVENTION

The invention relates in general to mobile communication devices and in particular to mobile communication devices having touch screens.

### Description of the Related Art

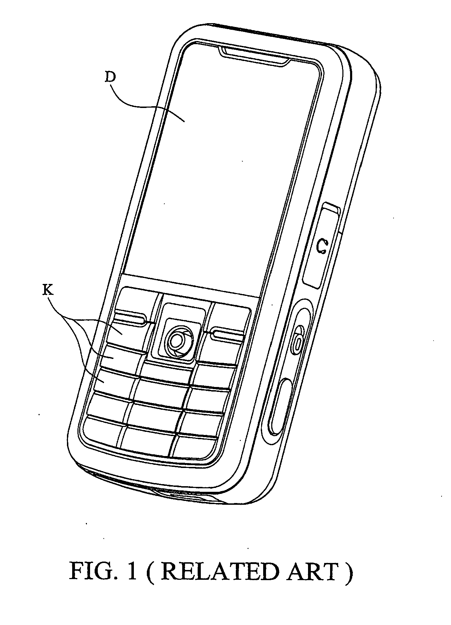

Referring to FIG. 1, a traditional mobile phone comprises a plurality of keys K and a screen D above the keys K. Users can dial numbers and input data via the keys K. In addition to basic communication function, the mobile phone can switch to other function modes for various function applications, such as numerical computing or address book. However, traditional keys K may not provide optimum interface for users with regard to various attributes of additional function applications.

### BRIEF SUMMARY OF THE INVENTION

Mobile communication devices are provided. A mobile communication device comprises a main surface and a touch screen acting as the only input interface on the main surface. When the mobile communication device is in a communication mode, the touch screen displays a first image through which users input data and execute a communication function. When the mobile communication is in an additional function mode, the touch screen displays a second image through which users input data and execute an additional function.

### BRIEF DESCRIPTION OF THE DRAWINGS

The invention can be more fully understood by reading the subsequent detailed description and examples with references made to the accompanying drawings, wherein:

FIG. 1 is a perspective diagram of a traditional mobile phone;

FIG. 2 is a perspective diagram of a mobile communication device;

FIGs. 3A and 3B are perspective diagrams of a menu displayed on a touch screen;

FIG. 4 is a perspective diagram of a touch screen displaying a first image when in a communication mode;

FIG. 5 is a perspective diagram of a touch screen displaying a calculator;

FIG. 6 is a perspective diagram of a touch screen displaying a radio;

FIG. 7 is a perspective diagram of a touch screen displaying an hourglass;

FIG. 8 is a perspective diagram of a touch screen displaying an address book;

FIG. 9 is a perspective diagram of a touch screen displaying a ruler;

FIG. 10 is a perspective diagram of a touch screen displaying a camera control panel;

FIG. 11 is a perspective diagram of a touch screen displaying a video game control panel;

FIG. 12 is a perspective diagram of a touch screen displaying a keyboard; and

FIG. 13 is a perspective diagram of a touch screen displaying an abacus.

### DETAILED DESCRIPTION OF THE INVENTION

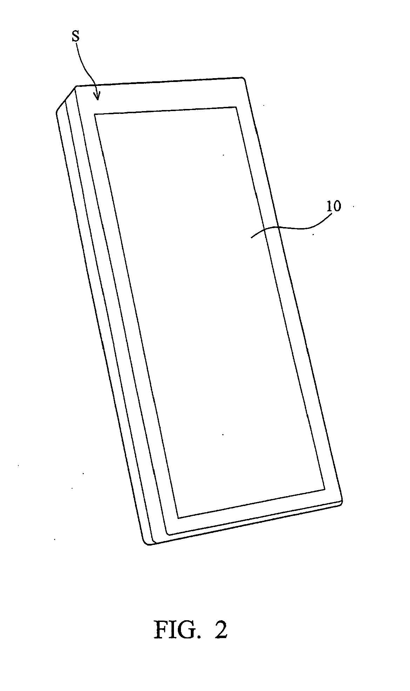

Referring to FIG. 2, an embodiment of a mobile communication device is switched between a communication mode and an additional function mode for executing a communication function or an additional function (such as numerical computing or address book function). In this embodiment, the mobile communication device is a mobile phone having no input key and merely comprising a touch screen 10 disposed on a main surface S thereof as an input interface, wherein users can execute communication or other additional functions through the touch screen 10. Specifically, dimensions of the touch screen 10 approximate the main surface S, and when the mobile communication device is shut off, the touch screen 10 exhibits a black background consistent with a black casing of the mobile communication device.

Rather than traditional mobile phone using input keys, the touch screen 10 in this embodiment acts as the only input interface on the main surface S. When the mobile communication device is in the communication mode, users can dial numbers and execute communication function through the touch screen 10. Similarly, when the mobile communication device is switched to an additional function mode, users can manipulate the touch screen 10 for inputting data or performing a specific additional function.

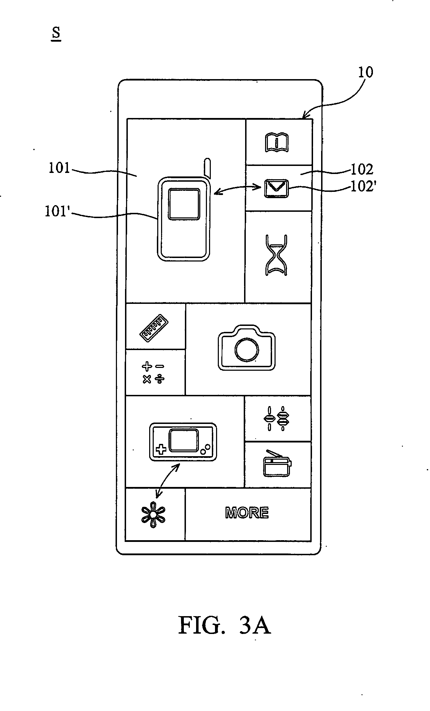

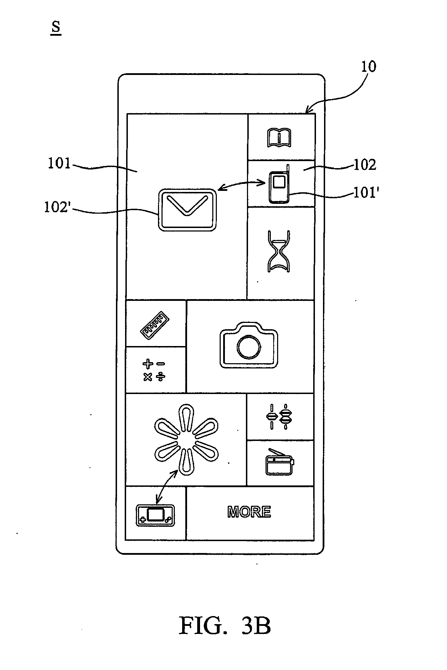

Referring to FIG. 3A, when the mobile communication device is in a menu mode, a menu is shown on the touch screen 10. Here, the menu comprises at least a first block 101 and a second block 102. The first block 101 has a first function icon 101', and the second block 102 has a second function icon 102', respectively. As shown in FIG. 3A, dimensions of the first block 101 and the first function icon 101' exceed the second block 102 and the second function icon 102'. Users can click the icons in different blocks to initiate the communication mode or an additional function mode. In this embodiment, positions of the icons 101' and 102' are exchangeable by directly dragging them on the touch screen 10, as shown in FIG. 3A and 3B.

In accordance with FIGs. 3A and 3B, the invention further provides a display method of a menu on a touch screen of a communication. First, the menu is displayed on the touch screen 10 including a plurality of blocks, wherein each of the blocks has a specific function icon. Subsequently, the blocks or the icons are rearranged according to a predetermined rule. For example, when clicks of the second function icon 102' (FIG. 3A) within a specific period exceed that of the first function icon 101', a processor (not show) of mobile communication device transmits a control signal to the touch screen 10 and exchanges positions of the two function icons 101' and 102', as shown in FIG. 3B, wherein dimensions of the second function icon 102' exceed the first function icon 101'.

In some embodiments, when clicks of the second function icon 102' (FIG. 3A) within a specific period exceed that of the first function icon 101', the processor transmits a control signal to the touch screen 10 and adjusts the blocks 101 and 102 and the function icons 101' and 102', such that dimensions of the second block 102 exceed the first block 101, and dimensions of the second function icon 102' exceed the first function icon 101', facilitating convenience to the frequent usage of the second function icon 102'.

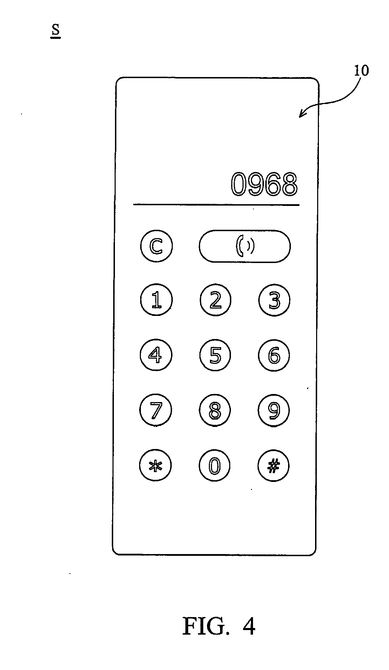

When clicking icon 101' in FIG. 3A, the communication mode is initiated, and the touch screen 10 displays a first image S, as shown in FIG. 4. Hence, users can dial numbers and execute communication function as a mobile phone by manipulating the touch screen 10.

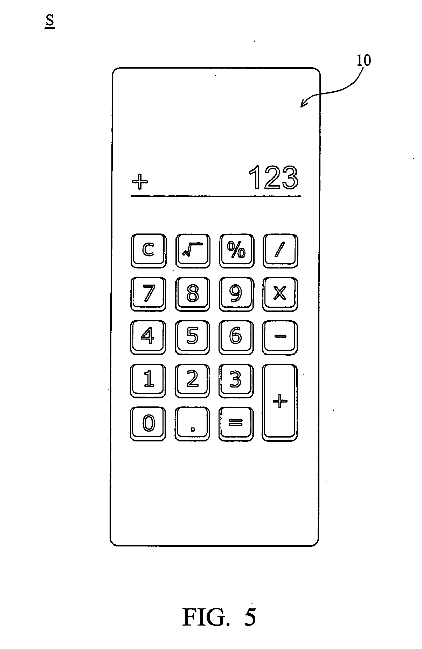

Various additional function modes can also be initiated by clicking corresponding icons as shown in FIG.3. In this embodiment, when an additional function mode is initiated, the touch screen 10 displays a second image, such as the images shown in FIGs. 5-13. Hence, users can manipulate the touch screen 10 to input data and execute a specific additional function with the second image.

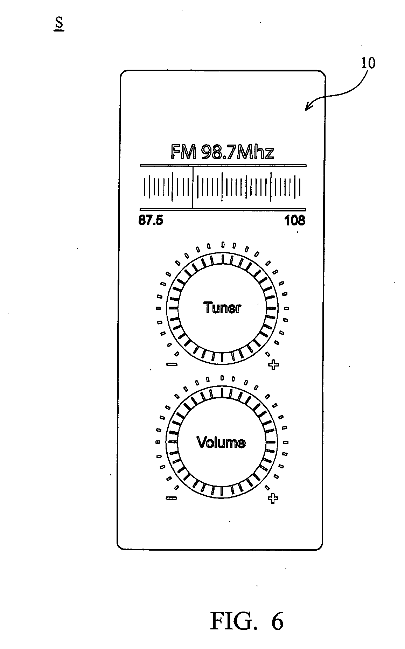

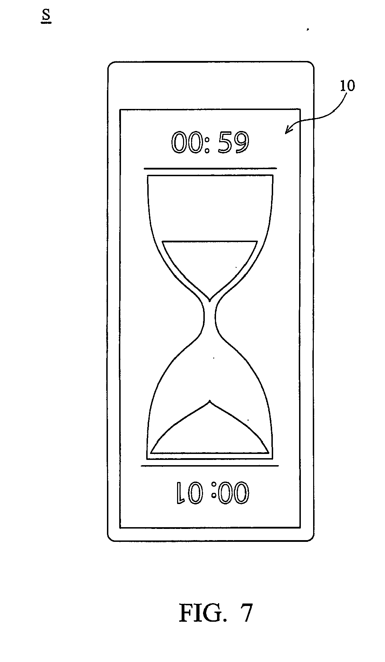

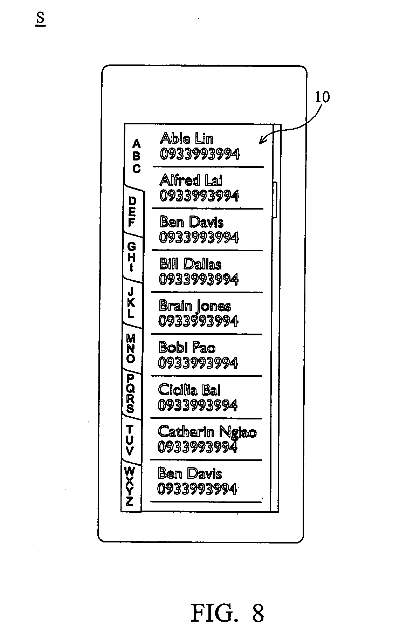

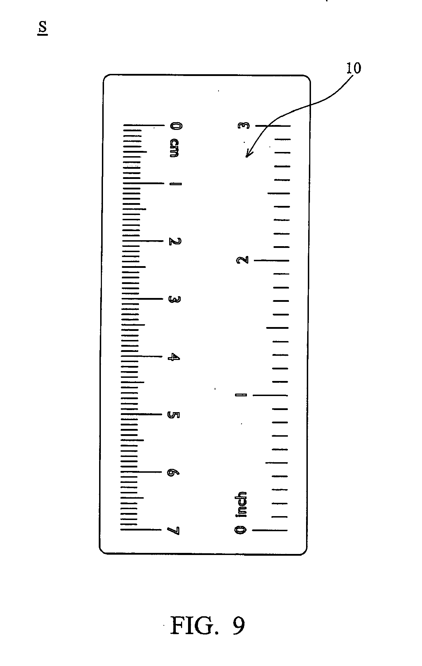

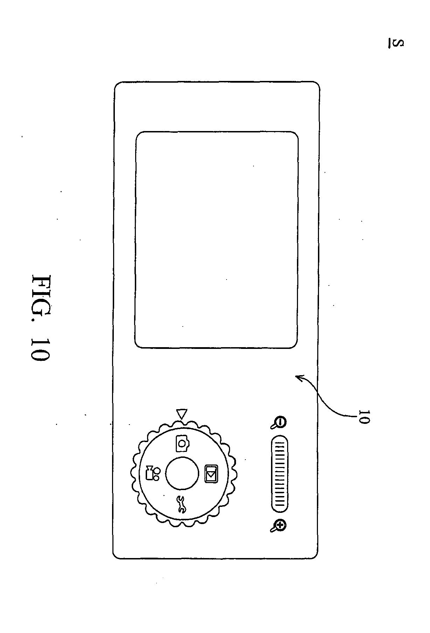

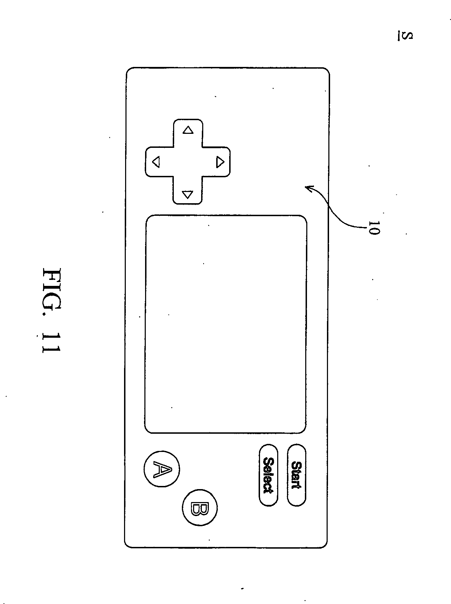

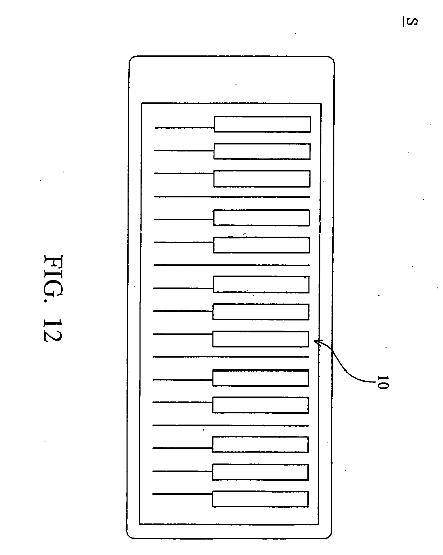

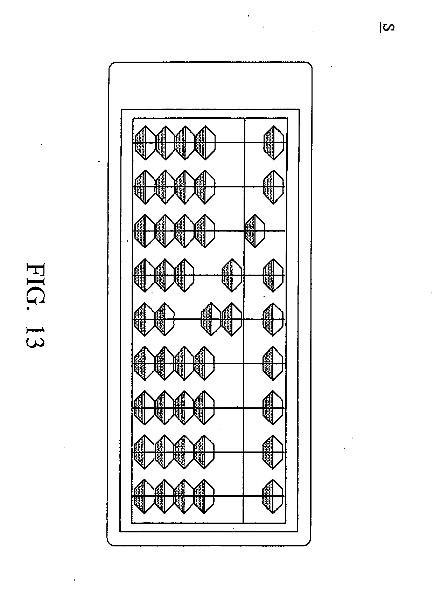

Referring to FIG. 5, when an additional function mode is initiated for numerical computing, the touch screen 10 displays a second image of a calculator. Similarly, when an additional function mode is initiated for radio function, the touch screen 10 displays a second image of a radio (FIG. 6). When an additional function mode is initiated for timing function, the touch screen 10 displays a second image of an hourglass (FIG. 7). When an additional function mode is initiated for address book, the touch screen 10 displays a second image of an address book (FIG. 8). When an additional function mode is initiated for length measurement, the touch screen 10 displays a second image of a ruler (FIG. 9). When an additional function mode is initiated for photography, the touch screen 10 displays a second image of a camera control panel (FIG. 10). When an additional function mode is initiated for video game, the touch screen 10 displays a second image of a video game control panel (FIG. 11). When an additional function mode is initiated for playing music, the touch screen 10 displays a second image of a keyboard (FIG. 12). When an additional function mode is initiated for making arithmetic calculations, the touch screen 10 displays a second image of an abacus (FIG. 13).

In this embodiment, since the touch screen 10 acts as the only input interface approximately covering the main surface S, capable of realistic simulation of various apparatus in the real world. Compared with traditional input keys of mobile phones, this embodiment provides a more versatile and human interface for users.

Additionally, the mobile communication device may comprise a detector detecting posture of the mobile communication device to refresh display of the touch screen 10. In an exemplary embodiment, when the mobile communication device is in an additional function mode for timing function, the touch screen 10 displays a dynamic hourglass pattern as shown in FIG. 7. The detector, such as a gravity sensor, detects posture variation of the mobile communication device and transmits an electrical signal to a processor. Subsequently, the processor transmits a refresh signal to the touch screen 10 according to the electrical signal and an internal clock of the mobile communication device, to refresh the hourglass pattern on the touch screen 10 and facilitate realistic simulation of a true hourglass.

Furthermore, the mobile communication device can also be switched to the communication mode or an additional function mode by detecting posture thereof In an exemplary embodiment, when the detector detects the mobile communication device in an erect posture, the mobile communication device is switched to the communication mode, and the touch screen 10 shifts to the first image as shown in FIG. 4. Alternatively, when the detector detects the mobile communication device in a prone posture, the mobile communication device is switched to an additional function mode, and the touch screen 10 shifts to the second image, such as the camera or video game control panel image shown in FIGs. 10 and 11 for photography or playing video games.

Mobile communication devices are provided according to the embodiments. When in a communication mode, users can input data and execute communication function completely through a touch panel displaying a first image. When the mobile communication device switches to an additional mode, users can input data and execute an additional function completely through a touch panel displaying a second image. In some embodiments, the touch panel almost occupies a main surface of the mobile communication device and acts as the only input interface without traditional input keys, facilitating realistic simulations for various apparatuses and capable of more versatile and human interface for users.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A mobile communication device selectively executing a communication function in a communication mode or an additional function in an additional function mode, comprising:
a main surface; and
a touch screen acting as the only input interface on the main surface;
wherein when the mobile communication device is in the communication mode, the touch screen displays a first image through which users input data and execute the communication function, and when the mobile communication is in the additional function mode, the touch screen displays a second image through which users input data and execute the additional function.

2. The mobile communication device as claimed in claim 1, wherein dimensions of the touch screen approximate the main surface.

3. The mobile communication device as claimed in claim 1, wherein the touch screen displays a menu when the mobile communication device is in a menu mode, and the communication mode and the additional function mode are initiated by manipulating the menu.

4. The mobile communication device as claimed in claim 3, the menu including a first block and a second block smaller than the first block, wherein the first block includes a first function icon, and the second block includes a second function icon.

5. The mobile communication device as claimed in claim 4, wherein positions of the first and second function icons are exchangeable by dragging them on the touch screen.

6. The mobile communication device as claimed in claim 4, further comprising a processor electrically connecting the touch screen, wherein when clicks of the second function icon exceed that of the function icon within a specific period, the processor sends a control signal to the touch screen and rearranges the first and second blocks or the first and second function icons.

7. The mobile communication device as claimed in claim 6, wherein when clicks of the second function icon exceed that of the function icon within a specific period, the processor sends the control signal to the touch screen and exchanges positions of the first and second function icons.

8. The mobile communication device as claimed in claim 6, wherein when clicks of the second function icon exceed that of the function icon within a specific period, the processor sends the control signal to the touch screen and rearranges the first and second blocks, such that dimensions of the second block exceed those of the first block.

9. The mobile communication device as claimed in claim 1, wherein the additional function comprises a timing function.

10. The mobile communication device as claimed in claim 9, wherein the second image comprises an hourglass pattern.

11. The mobile communication device as claimed in claim 10, further comprising a detector and a processor, wherein the detector detects posture of the mobile communication device and transmits an electrical signal to the processor, and the processor transmits a refresh signal to the touch screen according to the electrical signal, to refresh the hourglass pattern.

12. The mobile communication device as claimed in claim 11, further comprising a clock electrically connected to the processor, wherein the processor transmits a control signal to the touch screen and refreshes the hourglass pattern according to the clock.

13. The mobile communication device as claimed in claim 1, further comprising a detector and a processor, wherein the detector detects posture of the mobile communication device and transmits an electrical signal to the processor, and the processor transmits a control signal to the touch screen according to the electrical signal, to refreshes display of the touch screen.

14. The mobile communication device as claimed in claim 13, wherein the additional function comprises a timing function.

15. The mobile communication device as claimed in claim 14, wherein the touch screen displays an hourglass pattern.

16. The mobile communication device as claimed in claim 15, further comprising a clock electrically connected to the processor, wherein the processor transmits a refresh signal to the touch screen and refreshes the hourglass pattern according to the electrical signal and a clock signal of the clock.

17. A mobile communication device, comprising:
a main surface; and
a touch screen, disposed on the main surface, displaying a menu including a first block having a first function icon and a second block having a second function icon; and
a processor electrically connecting the touch screen and sending a control signal to the touch screen to rearrange the first and second blocks or the first and second function icons.

18. The mobile communication device as claimed in claim 17, wherein positions of the first and second function icons are exchangeable by dragging them on the touch screen.

19. The mobile communication device as claimed in claim 17, wherein when clicks of the second function icon exceed that of the first function icon within a specific period, the processor sends the control signal to the touch screen and exchanges positions of the first and second function icons.

20. The mobile communication device as claimed in claim 17, wherein when clicks of the second function icon exceed that of the first function icon within a specific period, the processor sends the control signal to the touch screen and rearranges the first and second blocks, such that dimensions of the second block exceed those of the first block.

21. A display method of a menu on a touch screen of a communication device, comprising:
(a) displaying the menu on the touch screen, wherein the menu includes a first block having a first function icon and a second block having a second function icon; and
(b) rearranging the first and second blocks or the first and second function icons according to a predetermined rule.

22. The display method as claimed in claim 21, wherein step (b) comprises comparing clicks of the first and second function icons within a specific period and exchanging positions of the first and second function icons.

23. The display method as claimed in claim 21, wherein step (b) comprises comparing clicks of the first and second function icons within a specific period and adjusting dimensions of the first and second blocks.
